# EUROPÄISCHE PATENTSCHRIFT

(11) **EP 1 590 220 B1**
(45) Veröffentlichungstag und Bekanntmachung des Hinweises auf die Patenterteilung: **13.09.2006**
(21) Anmeldenummer: 04707157.6
(22) Anmeldetag: 31.01.2004
(51) Int. Cl.: B60T 10/02

(54) **ANTRIEBSANORDNUNG MIT ZUSCHALTBAREM RETARDER**
DRIVE TRAIN WITH ENGAGING RETARDER
DISPOSITIF D'ENTRAINEMENT DOTE D'UN RALENTISSEUR ENCLENCHABLE

(30) Priorität: 08.02.2003 DE 10305239
(43) Veröffentlichungstag der Anmeldung: 02.11.2005
(73) Patentinhaber: ZF FRIEDRICHSHAFEN AG, 88038 Friedrichshafen (DE)
(72) Erfinder: HEINZELMANN, Karl-Fritz, 88074 Meckenbeuren (DE)
(86) Internationale Anmeldenummer: PCT/EP2004/000862
(87) Internationale Veröffentlichungsnummer: WO 2004/069624

(56) Entgegenhaltungen:
- WO-A-86/02608
- DE-A- 19 840 284
- DE-A- 19 840 287
- GB-A- 330 671

## Beschreibung

Die Erfindung betrifft eine Antriebsanordnung für Kraftfahrzeuge mit einem Retarder an einem Getriebe nach dem Oberbegriff von Anspruch 1.

Neben den Betriebsbremsen eines Fahrzeuges, insbesondere eines Nutzfahrzeuges, die im Regelfall einem Verschleiß unterliegende Reibungsbremsen sind, werden zusätzliche, verschleißfreie Verzögerungseinrichtungen, wie Retarder, mehr und mehr auch vom Gesetzgeber gefordert und von den Fahrzeugherstellern angeboten.

Zu den Retardern werden sowohl zusätzlich am Getriebe oder Motor angeordnete hydrodynamische, hydrostatische oder elektrodynamische Bremseinrichtungen gezählt, als auch solche Systeme, die in Form eines "Intarders" innerhalb des Getriebegehäuses vorgesehen sind.
Retarder werden des weiteren unterschieden in Primärretarder, die in Abhängigkeit von der Motordrehzahl arbeiten, und in Sekundärretarder, die in Abhängigkeit von der Fahrzeuggeschwindigkeit arbeiten.
Bei den hydrodynamischen Retardern kann als Mittel, das den Retarder durchströmt und das Wärmeenergie aufnimmt und zu einer Kühleinrichtung hin abführt, Öl oder Wasser verwendet werden. Obwohl in der überwiegenden Zahl der Anwendungsfälle Öl als Mittel verwendet wird, ist es bereits aus der GB 330671 bekannt, auch Wasser für hydrodynamische Bremseinrichtungen in schweren Kraftfahrzeugen zu verwenden.

Bei hydrodynamischen Retardern ist im Allgemeinen der Rotor zum Abbremsen des Fahrzeugs direkt mit einer Getriebewelle verbunden. Bei Primärretardern ist dies die Antriebswelle bzw. Getriebeeingangswelle, und bei Sekundärretardern ist dies die Getriebeabtriebswelle. Der Stator ist in der Regel gehäusefest. Die Bremswirkung wird dadurch erzielt, dass der Retarder mehr oder weniger mit dem durchströmenden Mittel befüllt wird. Der Retarder ist üblicherweise nicht aktiviert, wenn Rotor und Stator nicht mit Flüssigkeit gefüllt sind. Dadurch, dass sich der Rotor auch im nicht aktivierten Zustand dreht, entsteht Reibung in Form von Lagerreibung und insbesondere in Form von Luftzirkulation. Es gibt Einrichtungen, um die Zirkulation von Luft zwischen Rotor und Stator zu reduzieren und dadurch die Leerlaufleistung zu verringern. Die Reduzierung gelingt jedoch nur in beschränktem Maße. Die Reibung im Retarder im nicht aktivierten Zustand führt abhängig von der Drehzahl zu Verlustleistung und somit zu erhöhtem Kraftstoffverbrauch.

Aus der WO 86/02608 ist eine Antriebanordnung bekannt, bei der ein hydrodynamischer Retarder direkt von der Abtriebswelle des Wechselgetriebes aus angetrieben wird. Der Retarder ist unabhängig von der Drehzahl des Motors und von der Eingangswellendrehzahl des Getriebes. Dadurch wird erreicht, dass beim Schalten des Wechselgetriebes keine Zugkraftunterbrechung und keine Momentänderung auftritt. Gleichzeitig bietet der Antrieb des Retarders durch eine Hochtreiberstufe die Möglichkeit, die Drehzahl der Abtriebswelle des Wechselgetriebes zu erhöhen und damit die Wirkung des Retarders zu verbessern. Durch eine zwischen dem Antrieb des Retarders und dem Retarder selbst angeordnete Trennkupplung ist der Retarder im normalen Fahrbetrieb abschaltbar. Dadurch werden zwar die Verluste verringert, die auch bei einem entleerten hydrodynamischen Retarder auftreten können, aber es ist immer eine aufwendige Trennkupplung erforderlich. Um den stillstehenden Retarder mit der mit hoher Drehzahl rotierenden Getriebewelle zu verbinden, muss die Trennkupplung eine Synchronisiereinrichtung aufweisen, die in bekannter Weise der Drehzahlangleichung der Bauteile dient. Dazu ist beispielsweise eine Synchronisiereinrichtung in Konusbauweise oder insbesondere in Lamellenbauweise erforderlich, die aufwendig und teuer ist.

Der Erfindung liegt die Aufgabe zugrunde, eine Antriebsanordnung mit zuschaltbarem Retarder aufzuzeigen, die einfacher und kostengünstiger aufgebaut ist und ein Verfahren zum Betreiben dieser Anordnung anzugeben.

Die Aufgabe wird gelöst durch einen Retarder mit den Merkmalen des Anspruch 1 und eine Verfahren nach Anspruch 8. Ausgestaltungen sind Gegenstand von Unteransprüchen.

Eine Antriebsanordnung für Kraftfahrzeuge umfasst eine Antriebsmaschine, ein Getriebe, eine zwischen der Antriebsmaschine und dem Getriebe angeordnete Trennkupplung und einen als Dauerbremseinrichtung ausgebildeten Retarder. Der Retarder ist an eine Getriebewelle zuschaltbar. Erfindungsgemäß wird vorgeschlagen, dass zur Zuschaltung des Retarders eine unsynchronisierte Klauenkupplung vorgesehen ist und dass die Drehzahlanpassung von Retarder und angetriebener Getriebewelle durch die Trennkupplung zwischen der Antriebsmaschine und dem Getriebe erfolgt.

Ein erfindungsgemäßes Verfahren zum Betreiben dieser Anordnung und zur Zuschaltung eines Retarders in einer Antriebsanordnung für Kraftfahrzeuge mit einer Antriebsmaschine, einem Getriebe, einer zwischen der Antriebsmaschine und dem Getriebe angeordneten Trennkupplung und mit einem als Dauerbremseinrichtung ausgebildeten Retarder, der von einer Getriebewelle angetrieben wird, umfasst die Verfahrensschritte, dass zur Zuschaltung des Retarders zunächst die Drehmomentübertragung im Getriebe unterbrochen wird, anschließend eine drehfeste Verbindung zwischen der Trennkupplung und dem Retarder hergestellt wird und dass dann mit der Trennkupplung die Drehzahl des Retarders an die Getriebebauteildrehzahl angepasst wird, die der Retarder nach Beendigung der Drehmomentunterbrechung im Getriebe erreichen soll. Anschließend wird die Drehmomentunterbrechung im Getriebe beendet.

Vorzugsweise ist die Trennkupplung zwischen der Antriebsmaschine und dem Getriebe eine automatisierte Reibungskupplung, deren Öffnungs- und Schließvorgänge nach vorgegebenen Regeln bzw. aktuellen Berechnungen automatisch ablaufen. In einer vorteilhaften Ausgestaltung ist der Retarder ein von der Getriebeeingangsdrehzahl abhängiger Primärretarder, und in einer weiteren vorteilhaften Ausgestaltung ist der Retarder ein von der Getriebeausgangsdrehzahl abhängiger Sekundärretarder.

In einer vorteilhaften Weiterbildung der Erfindung ist eine Schaltkupplung mit mehreren Schaltstellungen vorgesehen, die in einer ersten Schaltstellung eine drehfeste Verbindung zwischen einer über die Trennkupplung angetriebenen Welle des Getriebes und einer Abtriebswelle des Getriebes ermöglicht. Das ist der normale Fahrzustand ohne zugeschalteten Retarder. In einer zweiten Schaltstellung ist eine drehfeste Verbindung zwischen der über die Trennkupplung angetriebenen Welle des Getriebes und dem Retarder ermöglicht. In dieser Schaltstellung ist die Abtriebswelle des Getriebes von den sonstigen Wellen des Getriebes getrennt und der Retarder kann über die Trennkupplung in seiner Drehzahl angepasst werden. In der dritten Schaltstellung ist eine drehfeste Verbindung zwischen der über die Trennkupplung angetriebenen Welle des Getriebes, der Abtriebswelle des Getriebes und dem Retarder ermöglicht. In dieser Schaltstellung ist der Zustand erreicht, dass bei eingeschaltetem Retarder der Durchtrieb zwischen der über die Trennkupplung angetriebenen Welle des Getriebes und der Abtriebswelle erreicht ist und gleichzeitig der Retarder zugeschaltet ist.

Eine bevorzugte Ausführungsform zeigt einen über eine Hochtreiberstufe angetriebenen Retarder. In einer besonders vorteilhaften Ausbildung der Erfindung ist in der Antriebsanordnung getriebeabtriebsseitig ein Bereichsgruppengetriebe vorgesehen, das eine Schaltkupplung mit einer Neutralstellung aufweist. In der Neutralstellung befindet sich die Schaltkupplung während der Synchronisierung und der Zuschaltung des Retarders.

Im nicht aktivierten Zustand steht der Retarder still und erzeugt im ausgeschalteten Zustand keine Verluste. Bei der Aktivierung des Retarders, entweder durch eine manuelle Betätigung eines Schalters, insbesondere eines Stufenschalters für verschiedene Bremsstufen, oder eines ebenfalls gestuften Bremspedals, wird zunächst die Trennkupplung zwischen der Antriebsmaschine und dem Getriebe, die in der Regel auch die Anfahrkupplung des Fahrzeuges darstellt, geöffnet. Im Getriebe wird die Drehmomentübertragung unterbrochen. Dies geschieht beispielsweise indem das Getriebe nach Neutral geschaltet wird oder in einem angeschlossenen Bereichsgruppengetriebe die Schaltkupplung öffnet und die Drehmomentübertragung unterbricht. Die Drehzahl der Getriebewelle, die mit dem Retarder zu verbinden ist, reduziert sich, wobei diese Reduzierung gegebenenfalls durch zusätzliche Bremseinrichtungen, wie beispielsweise eine Getriebebremse, unterstützt werden kann. Nach Erreichen einer für die Schaltung der Klauenkupplung zulässigen Drehzahl, die bei Null oder einer geringen Differenzdrehzahl liegen kann, wird die Klauenkupplung geschlossen und der Retarder mit der Getriebewelle verbunden.

Die Trennkupplung wird geschlossen und mit Hilfe der Trennkupplung wird die Drehzahl des Retarders und der mit ihm verbundenen Getriebeteile an die Drehzahl angepasst, die zu der aktuelle Fahrzeuggeschwindigkeit bzw. zu den Fahrzeugzustandsbedingungen passt, wenn die Unterbrechung der Drehmomentübertragung wieder aufgehoben wird.

Im Getriebe wird anschließend der zur Fahrzeuggeschwindigkeit bzw. zu den Fahrzeugzustandsbedingungen passende Gang geschaltet und damit die Drehmomentübertragung und der Kraftfluss im Getriebe wieder hergestellt.

Das vom Retarder erzeugte Bremsmoment kann während oder nach der Zuschaltung des Retarders durch eine Variation des Befüllungsgrades des Retarders mit dem Arbeitsmittel durchgeführt werden. Während der Zugkraftunterbrechung bei der Öffnung der Trennkupplung und der Drehmomentübertragungsunterbrechung kann bei Bedarf mit der Betriebsbremse das Fahrzeuggesamtbremsmoment gleich gehalten und die Zugkraftunterbrechung überbrückt werden. Dies kann auch durch einen automatischen Eingriff über ein Bremsenmanagement erfolgen.

Durch Entleeren des Retarders wird das Bremsmoment abgebaut. Durch Öffnen der Klauenkupplung zwischen der Getriebewelle und dem Retarder wird der Retarder nicht weiter angetrieben, bleibt stehen und erzeugt keine weiteren Verluste.

Durch die erfindungsgemäße Anordnung wird das Erzeugen von Leerlaufverlusten des Retarders weitestgehend vermieden. Ein ansonsten hervorgerufener Kraftstoffmehrverbrauch entfällt. Die Befüllung des Retarders mit Arbeitsmittel kann auch im ausgeschalteten Zustand ganz oder teilweise erhalten bleiben. Die Einrichtung zum Befüllen und Entleeren des Retarders mit dem Arbeitsmittel kann dadurch gegebenenfalls einfacher gestaltet werden. Dazu kann beispielsweise auf einen Druckspeicher verzichtet werden, für die hydraulische Steuerung kann eine kleinere Pumpe vorgesehen sein, oder es ist, bei einem Retarder mit pneumatischer Steuerung, ein geringeres Luftvolumen vorzusehen.
In Verbindung mit einem automatisierten Schaltgetriebe, das auch über eine automatisierte Kupplung verfügt, können alle Funktion automatisiert ablaufen.

Die Erfindung wird anhand einer Zeichnung näher erläutert.
Es zeigen:
- Fig. 1: eine schematische Darstellung eines Getriebes im Fahrzeug;
- Fig. 2: eine erste Anordnung eines Primärretarders;
- Fig. 3: eine zweite Anordnung eines Primärretarders;
- Fig. 4: eine erste Anordnung eines Sekundärretarders;
- Fig. 5: eine erste Anordnung eines Sekundärretarders;
- Fig. 6: eine Schaltkupplung nach Fig. 4 und 5 und
- Fig. 7: eine Anordnung mit Bereichsgruppengetriebe.

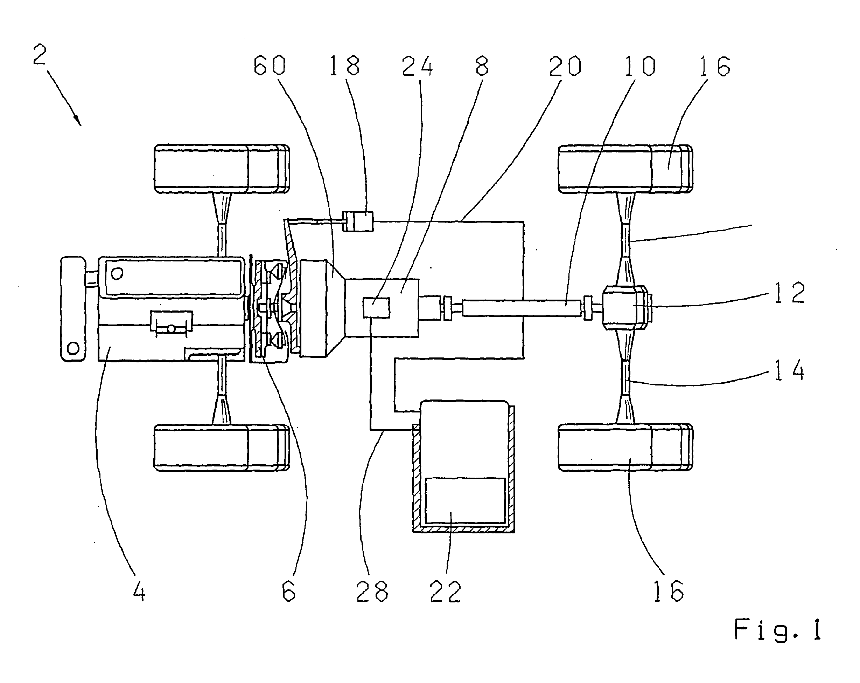

Die Fig. 1 zeigt eine schematische Darstellung eines Fahrzeuges 2 mit einem Antriebsmotor 4, der über eine Trennkupplung 6 auf ein Getriebe 8 einwirkt. Das Getriebe 8 ist über eine Abtriebswelle 10 mit einem Differenzial 12 verbunden, das über je eine Halbachse 14 ein Fahrzeugrad 16 antreibt. Die Reibungskupplung 6 wird von einem Aktuator 18 betätigt, der über eine Signalleitung 20 mit einer Steuerung 22 verbunden ist. Das Getriebe 8 wird von einem Getriebesteller 24 betätigt, der auf dem Gehäuse 60 des Getriebes 8 angeordnet ist und der über eine Leitung 28 mit der Steuerung 22 verbunden ist.

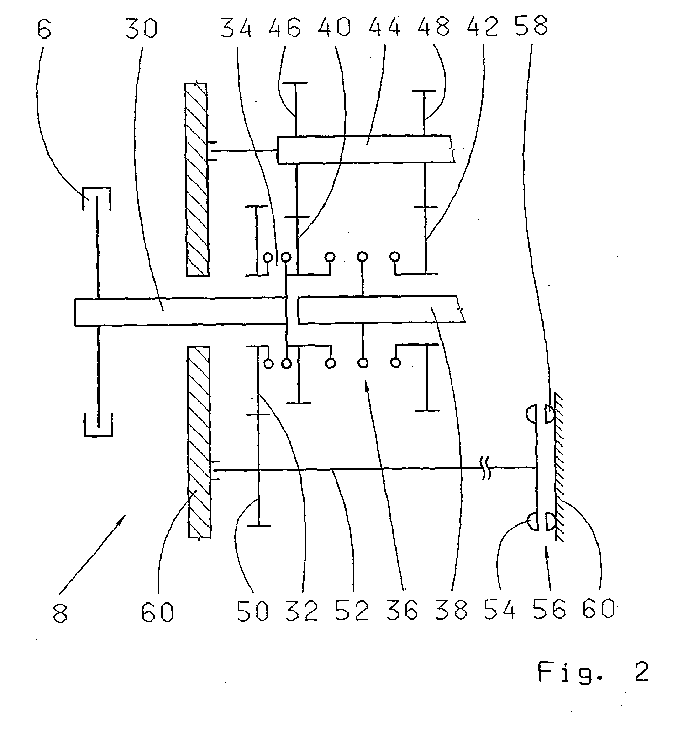

Die Fig. 2 erlaubt einen Blick in das Getriebe 8 mit einer ersten erfindungsgemäßen Anordnung. Mit der Trennkupplung 6 verbunden ist eine Eingangswelle 30 des Getriebes 8, auf der ein Zahnrad 32 drehbar angeordnet ist, das mit einer Schaltkupplung 34, die als Klauenkupplung ausgebildet ist, mit der Eingangswelle 30 verbindbar ist. Eine weitere Schaltkupplung 36 kann eine Hauptwelle 38 des Getriebes 8 entweder mit einem Zahnrad 40 oder mit einem Zahnrad 42 drehfest verbinden. Das Zahnrad 40 ist fest an der Eingangswelle 30 angeordnet oder mit der Eingangswelle 30 aus einem Stück ausgebildet. Das Zahnrad 42 ist drehbar auf der Hauptwelle 38 angeordnet. Beide Zahnräder 40 und 42 kämmen mit fest auf einer Vorgelegewelle 44 angeordneten Zahnrädern 46 und 48.
Das auf der Eingangswelle 30 angeordnete Zahnrad 32 kämmt mit einem Zahnrad 50, das auf einer Welle 52 angeordnet ist. Diese Welle 52 trägt auch den Rotor 54 des Retarders 56. Der Stator 58 des Retarders 56 ist am Getriebegehäuse 60 drehfest vorgesehen.

Im nicht aktivierten Zustand des Retarders 56 ist die Schaltkupplung 34 offen. Die Welle 52 wird nicht angetrieben und der Rotor 54 des Retarder 56 steht still und erzeugt im ausgeschalteten Zustand keine Verluste. Bei der Aktivierung des Retarders 56 wird zunächst die Trennkupplung 6 zwischen dem Antriebsmotor 4 und dem Getriebe 8 geöffnet. Im Getriebe 8 wird die Drehmomentübertragung unterbrochen, was beispielsweise durch Öffnen der Schaltkupplung 36 geschieht, so dass das Getriebe in Neutral steht. Die Drehzahl der Eingangswelle 30, die mit der Welle 52 und darüber mit dem Retarder 56 zu verbinden ist, reduziert sich. Nach Erreichen einer für die Schaltung der Schaltkupplung 34 zulässigen Drehzahl wird die Schaltkupplung 34 geschlossen und der Retarder 56 mit der Eingangswelle 30 verbunden.

Die Trennkupplung 6 wird geschlossen und mit Hilfe der Trennkupplung 6 wird die Drehzahl des Retarders 56 und der mit ihm verbundenen Getriebeteile an die Drehzahl angepasst, die zu der aktuelle Fahrzeuggeschwindigkeit bzw. zu den Fahrzeugzustandsbedingungen passt, wenn die Unterbrechung der Drehmomentübertragung wieder aufgehoben wird. Im Getriebe 8 wird anschließend der zur Fahrzeuggeschwindigkeit bzw. zu den Fahrzeugzustandsbedingungen passende Gang, beispielsweise durch Schließen der Schaltkupplung 36, geschaltet und damit die Drehmomentübertragung und der Kraftfluss im Getriebe 8 wieder hergestellt.

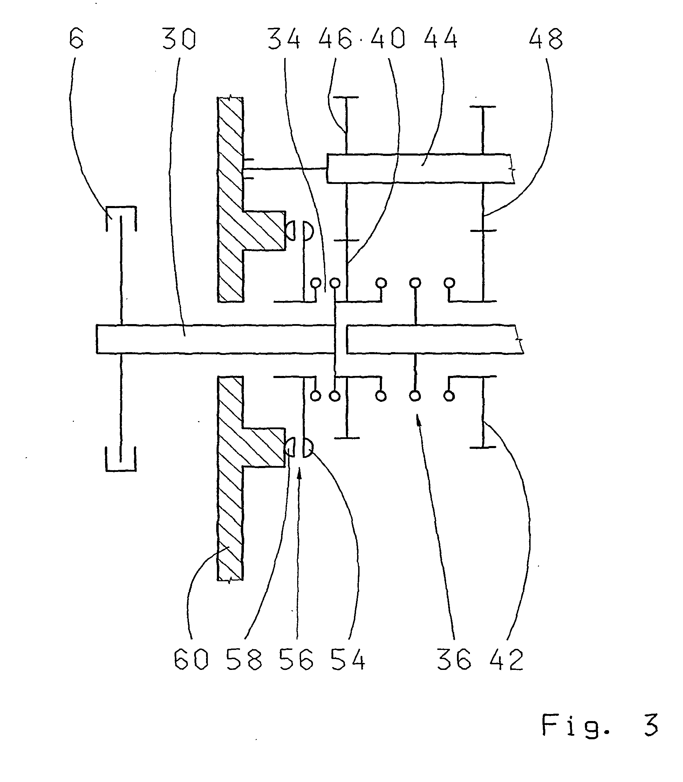

In der Fig. 3 ist eine Anordnung des Retarder 56 gezeigt, der unmittelbar auf der Eingangswelle 30 angeordnet ist. Hier wird über die Schaltkupplung 34 die Eingangswelle 30 direkt mit dem Rotor 54 des Retarders 56 verbunden.

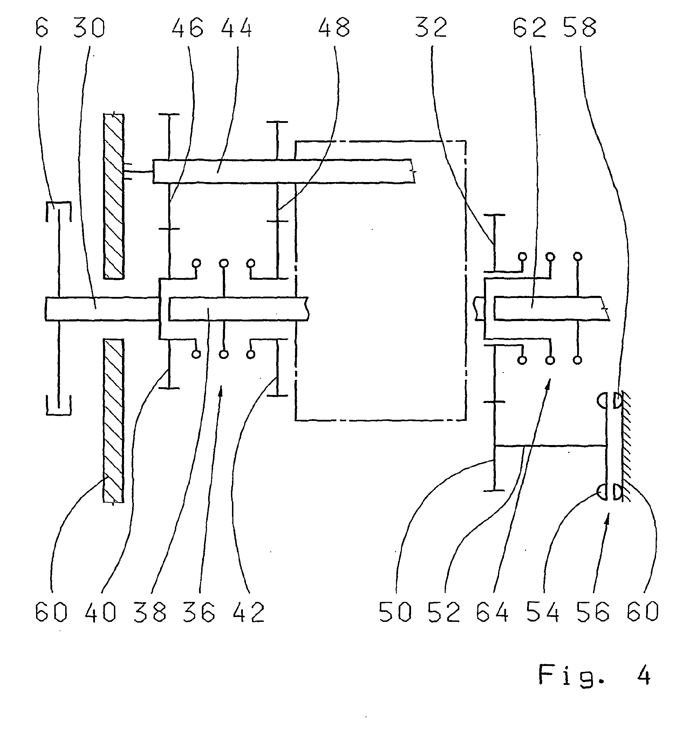

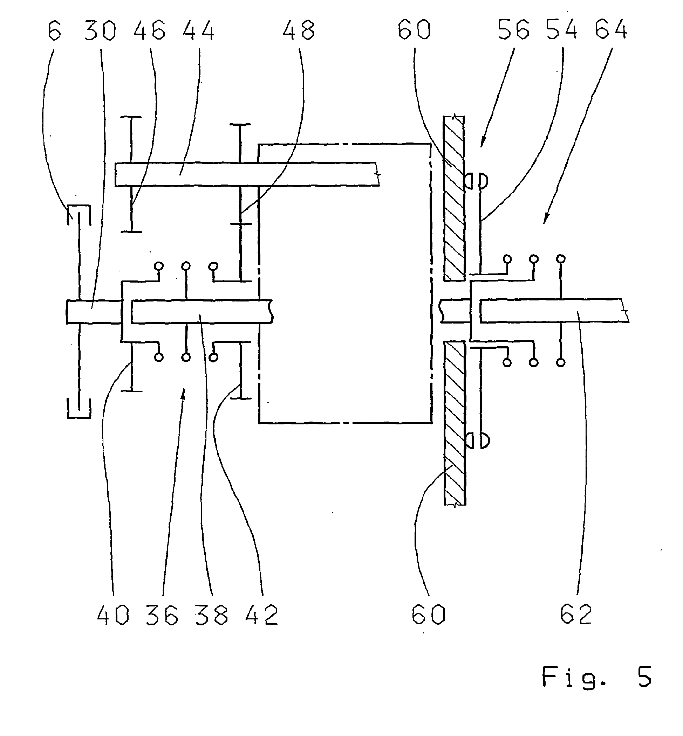

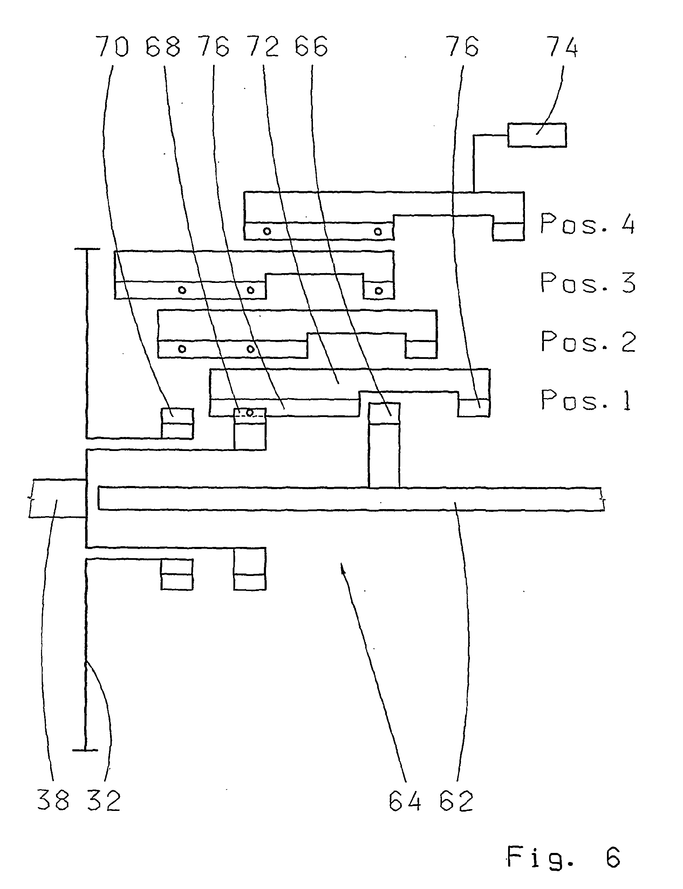

Die in den Fig. 2 und 3 gezeigten Retarder sind Primärretarder, die sich in Abhängigkeit von der Drehzahl des Antriebsmotors 4 drehen. Demgegenüber zeigen die Fig. 4 und 5 Sekundärretarder, die in Abhängigkeit von der Fahrzeuggeschwindigkeit betrieben werden, da sie mit der Abtriebswelle 62 des Getriebes 8, der Abtriebswelle 10 und über das Differenzial 12 und die Halbachsen mit den Fahrzeugrädern 16 verbunden sind. Auf der Abtriebswelle 62 des Getriebes 8 ist eine Schaltkupplung 64 angeordnet, die in Fig. 6 näher beschrieben wird. Auf der Hauptwelle 38 des Getriebes 8 ist ein Zahnrad 32 drehbar angeordnet, dass mit einem Zahnrad 50 auf einer Welle 52 drehfest verbunden ist. Mit der Welle 52 ist der Rotor 54 des Retarders 56 verbunden, dem der am Getriebegehäuse 60 angeordnete Stator 58 zugeordnet ist.

Mit der Trennkupplung 6 verbunden ist eine Eingangswelle 30 des Getriebes 8. Eine Schaltkupplung 36 kann eine Hauptwelle 38 des Getriebes 8 entweder mit einem Zahnrad 40 oder mit einem Zahnrad 42 drehfest verbinden. Das Zahnrad 40 ist fest an der Eingangswelle 30 angeordnet oder mit der Eingangswelle 30 aus einem Stück ausgebildet. Das Zahnrad 42 ist drehbar auf der Hauptwelle 38 angeordnet. Beide Zahnräder 40 und 42 kämmen mit fest auf einer Vorgelegewelle 44 angeordneten Zahnrädern 46 und 48.

In der Fig. 6 ist die Schaltkupplung 64 näher beschrieben. Die Abtriebswelle 64 ist mit einer Kuppelverzahnung 66 versehen, ebenso weist die Hauptwelle 38 eine Kuppelverzahnung 68 und das Zahnrad 32 eine Kuppelverzahnung 70 auf. Eine Schiebemuffe 72 ist mit einem Aktuator 74 verbunden und kann von diesem Aktuator 74 in vier unterschiedliche Position verstellt werden. Die Schiebemuffe weist eine unterbrochene Kuppelverzahnung 76 auf, die mit den Kuppelverzahnungen 66, 68 und 70 in Eingriff gebracht werden kann. In der Fig. 6 sind die vier Positionen nur zum besseren Verständnis übereinander dargestellt. Die Pos. 1 zeigt die Schiebemuffe 72 in einer Neutralposition, in der nur die Kuppelverzahnung 76 an der Schiebemuffe 72 und die Kuppelverzahnung 68 an der Hauptwelle 38 in Eingriff. Die Schaltkupplung 64 ist offen und der Retarder 56 befindet sich im nicht aktivierten Zustand. Die Welle 52 wird nicht angetrieben und der Rotor 54 des Retarder 56 steht still und erzeugt im ausgeschalteten Zustand keine Verluste. Bei der Aktivierung des Retarders 56 wird zunächst die Trennkupplung 6 zwischen dem Antriebsmotor 4 und dem Getriebe 8 geöffnet. Im Getriebe 8 wird die Drehmomentübertragung unterbrochen, was in dieser Anordnung durch die Neutralstellung der Schaltkupplung 64 geschieht, so dass das Getriebe in Neutral steht. Die Drehzahl der Hauptwelle 38, die mit der Welle 52 und darüber mit dem Retarder 56 zu verbinden ist, reduziert sich. Nach Erreichen einer für die Schaltung der Schaltkupplung 64 zulässigen Drehzahl wird die Schaltkupplung 64 geschlossen und der Retarder 56 mit der Hauptwelle 38 verbunden. Dazu wird die Schiebemuffe 72 vom Aktuator 74 in der Zeichnungsebene der Fig. 6 nach links verschoben in die Pos. 2, so dass die Kuppelverzahnung 76 der Schiebemuffe 72 sowohl mit der Kuppelverzahnung 68 an der Hauptwelle 38 als auch mit der Kuppelverzahnung 70 am Zahnrad 32 in Eingriff steht.

Die Trennkupplung 6 wird geschlossen und mit Hilfe der Trennkupplung 6 wird die Drehzahl des Retarders 56 und der mit ihm verbundenen Getriebeteile an die Drehzahl angepasst, die zu der aktuelle Fahrzeuggeschwindigkeit bzw. zu den Fahrzeugzustandsbedingungen passt, wenn die Unterbrechung der Drehmomentübertragung wieder aufgehoben wird. Im Getriebe 8 ist dazu die Drehmomentübertragung zwischen Trennkupplung 6 und Schaltkupplung 64 gegeben. Im Getriebe 8 wird anschließend der zur Fahrzeuggeschwindigkeit bzw. zu den Fahrzeugzustandsbedingungen passende Gang, beispielsweise durch die Schaltkupplung 36, geschaltet oder beibehalten. Um die Drehmomentübertragung und den Kraftfluss im Getriebe 8 wieder durchgängig herzustellen, wird die Schiebemuffe 72 noch weiter nach links verschoben in die Pos. 3, so dass die Kuppelverzahnung 76 an der Schiebemuffe 72 mit allen Kuppelverzahnungen 66, 68 und 70 in Eingriff kommt und dadurch die Hauptwelle 38, die Abtriebswelle 62 und über das Zahnrad 32 der Retarder 56 drehfest miteinander verbunden sind.

Nach dem Einsatz des Retarders 56 wird durch Entleeren des Retarders 56 das Bremsmoment abgebaut. Durch Öffnen der Schaltkupplung 64 zwischen der Hauptwelle 38 und dem Zahnrad 32 wird der Retarder nicht weiter angetrieben, bleibt stehen und erzeugt keine weiteren Verluste. Dazu wird die Schiebemuffe 72 nach rechts verschoben in die Pos. 4, in der die Kuppelverzahnung 76 an der Schiebemuffe 72 mit der Kuppelverzahnung 68 an der Hauptwelle 38 und der Kuppelverzahnung 66 an der Abtriebswelle 62 in Eingriff kommt und dadurch das Drehmoment von der Hauptwelle 38 auf die Abtriebswelle 62 übertragen werden kann.

In der Fig. 5 ist eine Anordnung des Retarder 56 gezeigt, der unmittelbar auf der Hauptwelle 38 angeordnet ist. Hier wird über die Schaltkupplung 64 die Hauptwelle 38 direkt mit dem Rotor 54 des Retarders 56 verbunden. Die Funktionsweise der Schaltkupplung 64 entspricht der Fig. 4.

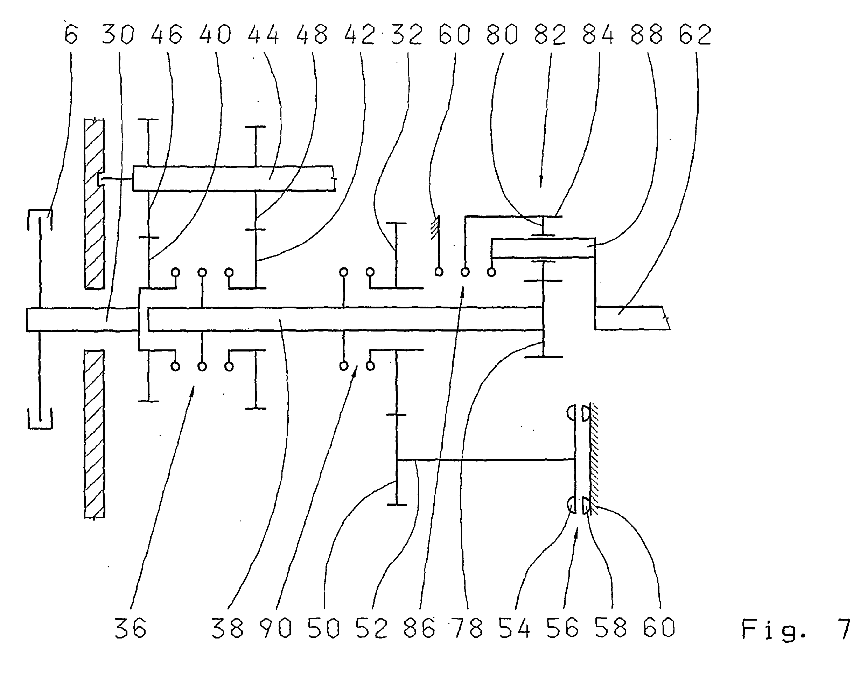

In der Fig. 7 ist auf der Hauptwelle 38 des Getriebes 8 ein Zahnrad 32 drehbar angeordnet, dass mit einem Zahnrad 50 auf einer Welle 52 drehfest verbunden ist. Mit der Welle 52 ist der Rotor 54 des Retarders 56 verbunden, dem der am Getriebegehäuse 60 angeordnete Stator 58 zugeordnet ist. Das Zahnrad 32 kann mit einer Schaltkupplung 90 drehfest mit der Hauptwelle 38 verbunden werden. Am Ende der Hauptwelle 38 ist ein Sonnenrad 78 angeordnet, das mit einem hier gezeigten Planetenrad 80 kämmt, von denen üblicherweise drei oder fünf Planetenräder in einem Planetengetriebe 82 um das Sonnenrad 78 herum angeordnet sind. Die Planetenräder 80 werden außen von einem Holrad 84 umschlossen, das mit einer Schaltkupplung 86 drehfest verbunden ist. Mit Hilfe der Schaltkupplung 86 ist mit dem Holrad 84 einerseits das Gehäuse 60 drehfest verbindbar, so dass das Holrad stillsteht, und andererseits ein Planetenträger 88 drehfest verbindbar, der seinerseits fest an der Abtriebswelle 62 des Getriebes 8 angeordnet ist. Hierdurch können in dem Planetengetriebe 82 zwei unterschiedliche Schaltstufen geschaltet werden. In einer Neutralstellung der Schaltkupplung 86 kann die Drehmomentübertragung zwischen der Hauptwelle 38 und der Abtriebswelle 62 unterbrochen werden.

Mit der Trennkupplung 6 verbunden ist eine Eingangswelle 30 des Getriebes 8. Eine Schaltkupplung 36 kann die Hauptwelle 38 des Getriebes 8 entweder mit einem Zahnrad 40 oder mit einem Zahnrad 42 drehfest verbinden. Das Zahnrad 40 ist fest an der Eingangswelle 30 angeordnet oder mit der Eingangswelle 30 aus einem Stück ausgebildet. Das Zahnrad 42 ist drehbar auf der Hauptwelle 38 angeordnet. Beide Zahnräder 40 und 42 kämmen mit fest auf einer Vorgelegewelle 44 angeordneten Zahnrädern 46 und 48.

Bei der Aktivierung des Retarders 56 wird zunächst die Trennkupplung 6 zwischen dem Antriebsmotor 4 und dem Getriebe 8 geöffnet. Im Getriebe 8 wird die Drehmomentübertragung unterbrochen, was in dieser Anordnung durch die Neutralstellung der Schaltkupplung 86 geschieht, so dass das Getriebe in Neutral steht. Die Drehzahl der Hauptwelle 38, die mit der Welle 52 und darüber mit dem Retarder 56 zu verbinden ist, reduziert sich. Nach Erreichen einer für die Schaltung der Schaltkupplung 90 zulässigen Drehzahl wird die Schaltkupplung 90 geschlossen und der Retarder 56 mit der Hauptwelle 38 verbunden.

Die Trennkupplung 6 wird geschlossen und mit Hilfe der Trennkupplung 6 wird die Drehzahl des Retarders 56 und der mit ihm verbundenen Getriebeteile an die Drehzahl angepasst, die zu der aktuelle Fahrzeuggeschwindigkeit bzw. zu den Fahrzeugzustandsbedingungen passt, wenn die Unterbrechung der Drehmomentübertragung wieder aufgehoben wird. Im Getriebe 8 ist dazu die Drehmomentübertragung zwischen Trennkupplung 6 und Schaltkupplung 90 gegeben. Im Getriebe 8 wird anschließend der zur Fahrzeuggeschwindigkeit bzw. zu den Fahrzeugzustandsbedingungen passende Gang, beispielsweise durch die Schaltkupplung 36, geschaltet oder beibehalten. Um die Drehmomentübertragung und den Kraftfluss im Getriebe 8 wieder durchgängig herzustellen, wird die Schaltkupplung 86 wieder geschlossen und dadurch die Hauptwelle 38, die Abtriebswelle 62 und über das Zahnrad 32 der Retarder 56 drehfest miteinander verbunden sind.

Nach dem Einsatz des Retarders 56 wird durch Entleeren des Retarders 56 das Bremsmoment abgebaut. Durch Öffnen der Schaltkupplung 90 zwischen der Hauptwelle 38 und dem Zahnrad 32 wird der Retarder nicht weiter angetrieben, bleibt stehen und erzeugt keine weiteren Verluste.

### Bezugszeichen

- 2: Fahrzeug
- 4: Antriebsmotor
- 6: Trennkupplung
- 8: Getriebe
- 10: Abtriebswelle
- 12: Differenzial
- 14: Halbachse
- 16: Fahrzeugrad
- 18: Aktuator
- 20: Signalleitung
- 22: Steuerung
- 24: Getriebesteller
- 28: Leitung
- 30: Eingangswelle
- 32: Zahnrad
- 34: Schaltkupplung
- 36: Schaltkupplung
- 38: Hauptwelle
- 40: Zahnrad
- 42: Zahnrad
- 44: Vorgelegewelle
- 46: Zahnrad
- 48: Zahnrad
- 50: Zahnrad
- 52: Welle
- 54: Rotor
- 56: Retarder
- 58: Stator
- 60: Getriebegehäuse
- 62: Abtriebswelle
- 64: Schaltkupplung
- 66: Kuppelverzahnung
- 68: Kuppelverzahnung
- 70: Kuppelverzahnung
- 72: Schiebemuffe
- 74: Aktuator
- 76: Kuppelverzahnung
- 78: Sonnenrad
- 80: Planetenrad
- 82: Planetengetriebe
- 84: Holrad
- 86: Schaltkupplung
- 88: Planetenträger
- 90: Schaltkupplung

## Patentansprüche

1. Antriebsanordnung für Kraftfahrzeuge (2) mit einer Antriebsmaschine (4), einem Getriebe (8), einer zwischen der Antriebsmaschine (4) und dem Getriebe (8) angeordneten Trennkupplung (6) und mit einem als Dauerbremseinrichtung ausgebildeten Retarder (56), der an eine Getriebewelle (30, 38) zuschaltbar ist, **dadurch gekennzeichnet, dass** zur Zuschaltung des Retarders (56) eine unsynchronisierte Klauenkupplung vorgesehen ist und dass die Drehzahlanpassung von dem Retarder (56) und der Getriebewelle (30, 38) durch die Trennkupplung (6) zwischen Antriebsmaschine (4) und Getriebe (8) erfolgt, während die Drehmomentübertragung in Getriebe (8) unterbrochen ist,

2. Antriebsanordnung nach Anspruch 1, **dadurch gekennzeichnet, dass** die Trennkupplung (6) eine automatisierte Reibungskupplung ist.

3. Antriebsanordnung nach Anspruch 1 oder 2, **dadurch gekennzeichnet, dass** der Retarder (56) ein von der Getriebeeingangsdrehzahl abhängiger Primärretarder ist.

4. Antriebsanordnung nach Anspruch 1 oder 2, **dadurch gekennzeichnet, dass** der Retarder (56) ein von der Getriebeausgangsdrehzahl abhängiger Sekundärretarder ist.

5. Antriebsanordnung nach einem der Ansprüche 1 bis 4, **dadurch gekennzeichnet, dass** der Retarder (56) über eine Hochtreiberstufe angetrieben ist.

6. Antriebsanordnung nach einem der Ansprüche 1, 2, 4 und 5, **dadurch gekennzeichnet, dass** eine Schaltkupplung (64) mit mehreren Schaltstellungen vorgesehen ist, die in einer ersten Schaltstellung eine drehfeste Verbindung zwischen einer über die Trennkupplung (6) angetriebenen Welle (38) des Getriebes (8) und einer Abtriebswelle (62) des Getriebes (8) ermöglicht, die in einer zweiten Schaltstellung eine drehfeste Verbindung zwischen der über die Trennkupplung (6) angetriebenen Welle (38) des Getriebes (8) und dem Retarder (56) ermöglicht und die in einer dritten Schaltstellung eine drehfeste Verbindung zwischen der über die Trennkupplung (6) angetriebenen Welle (38) des Getriebes (8), der Abtriebswelle (62) des Getriebes (8) und dem Retarder (56) ermöglicht.

7. Antriebsanordnung nach einem der Ansprüche 1 bis 6, **dadurch gekennzeichnet, dass** getriebeabtriebsseitig ein Bereichsgruppengetriebe (82) vorgesehen ist, das eine Schaltkupplung (86) mit einer Neutralstellung aufweist, in der sich die Schaltkupplung (86) während der Zuschaltung des Retarders (56) befindet.

8. Verfahren zur Zuschaltung eines Retarders (56) in einer Antriebsanordnung für Kraftfahrzeuge (2) mit einer Antriebsmaschine (4), einem Getriebe (8), einer zwischen der Antriebsmaschine (4) und dem Getriebe (8) angeordneten Trennkupplung (6) und mit einem als Dauerbremseinrichtung ausgebildeten Retarder (56), der von einer Getriebewelle (30, 38) angetrieben wird, **dadurch gekennzeichnet, dass** zur Zuschaltung des Retarders (56) zunächst die Drehmomentübertragung im Getriebe (8) unterbrochen wird, anschließend eine drehfeste Verbindung zwischen der Trennkupplung (6) und dem Retarder (56) hergestellt wird und mit der Trennkupplung (6) die Drehzahl des Retarders (56) an die Getriebebauteildrehzahl angepasst wird, die der Retarder (56) nach Beendigung der Drehmomentunterbrechung im Getriebe (8) erreichen soll, und dass anschließend die Drehmomentunterbrechung im Getriebe (8) beendet wird.

## Claims

1. The invention relates to a drive concept for motor vehicles (2) with a driving engine (4), a transmission (8), a separating clutch (6) arranged between driving engine (4) and transmission (8), and with a constant-braking retarder (56), which can be connected to a transmission shaft (30, 38), **characterized in that** a non-synchronized dog clutch is provided for activation of the retarder (56), and that the speed adaptation of retarder (56) and transmission shaft (30, 38) is performed by the separating clutch (6) between driving engine (4) and transmission (8) while torque transmission in the transmission (8) is interrupted.

2. A drive concept according to claim 1, **characterized in that** the separating clutch (6) is an automated friction clutch.

3. A drive concept according to claim 1 or 2, **characterized in that** the retarder (56) is a primary retarder dependent on the transmission input speed.

4. A drive concept according to claim 1 or 2, **characterized in that** the retarder (56) is a secondary retarder dependent on the transmission output speed.

5. A drive concept according to one of the claims 1 through 4, **characterized in that** the retarder (56) is actuated by a step-up stage.

6. A drive concept according to one of the claims 1, 2, 4 and 5, **characterized in that** a shifting clutch (64) with several shifting positions is provided, with the first shifting position permitting a torsion-proof connection between the transmission (8) shaft (38) driven via the separating clutch (6) and a transmission (8) output shaft (62), with the second shifting position permitting a torsion-proof connection between the transmission (8) shaft (38) driven via the separating clutch (6) and the retarder (56), and with a third shifting position permitting a torsion-proof connection between the transmission (8) shaft (38) driven via the separating clutch (6), the output shaft (62) of the transmission (8) and the retarder (56).

7. A drive concept according to one of the claims 1 through 6, **characterized in that** on the transmission output end there is a range-change transmission (28) which features a shifting clutch (86) with a neutral position, which the shifting clutch (86) has engaged during activation of the retarder (56).

8. A method for activating a retarder (56) in a drive concept for motor vehicles (2) with a driving engine (4), a transmission (8), a separating dutch (6) arranged between driving engine (4) and transmission (8), and with a constant-braking retarder (56), which is actuated by a transmission shaft (30, 38), **characterized in that** for activation of the retarder (56), the transfer of torque in the transmission (8) is interrupted before a torsion-proof connection is established between the separating clutch (6) and the retarder (56) and the separating clutch (6) adapts the speed of the retarder (56) to the speed of the transmission component, which the retarder (56) is to reach after termination of the interruption of torque in the transmission (8), and that subsequently the interruption of torque in the transmission (8) is terminated.

## Revendications

1. Modèle de chaîne cinématique pour véhicules automobiles (2) dotée d'un moteur d'entraînement (4), d'une boîte de vitesses (8), d'un embrayage séparateur (6) disposé entre le moteur d'entraînement (4) et la boîte de vitesses (8), et d'un ralentisseur (56) conçu comme dispositif de freinage continu et qui peut être connecté à un arbre de boîte de vitesses (30, 38), **caractérisée en ce que** pour l'enclenchement du ralentisseur (56) est prévu un embrayage à crabots non synchronisé et **en ce que** l'adaptation de la vitesse de rotation du ralentisseur (56) et de l'arbre de boîte de vitesses (30, 38) s'effectue par l'embrayage séparateur (6) disposé entre le moteur d'entraînement (4) et la boîte de vitesses (8) dès que la transmission du couple dans la boîte de vitesses (8) est interrompue.

2. Modèle de chaîne cinématique selon la revendication 1, **caractérisée en ce que** l'embrayage séparateur (6) est un embrayage à friction automatisé.

3. Modèle de chaîne cinématique selon la revendication 1 ou 2, **caractérisée en ce que** le ralentisseur (56) est un ralentisseur primaire dépendant du régime d'entrée de la boîte de vitesses.

4. Modèle de chaîne cinématique selon la revendication 1 ou 2, **caractérisée en ce que** le ralentisseur (56) est un ralentisseur secondaire dépendant du régime d'entrée de la boîte de vitesses.

5. Modèle de chaîne cinématique selon une des revendications 1 à 4, **caractérisée en ce que** le ralentisseur (56) est entraîné par un train d'engrenages surmultiplicateur.

6. Modèle de chaîne cinématique selon une des revendications 1,2, 4 et 5, **caractérisée en ce que** est prévu un embrayage (64) disposant de plusieurs positions de commande, et qui dans une première position de commande permet de réaliser une liaison solidaire en rotation entre un arbre (38) de la boîte de vitesses (8) entraîné par l'embrayage séparateur (6) et un arbre de sortie (62) de la boîte de vitesses (8), et qui dans une deuxième position de commande permet de réaliser une liaison solidaire en rotation entre l'arbre (38) de la boîte de vitesses (8) entraîne par l'embrayage séparateur (6) et le ralentisseur (56), et qui dans une troisième position de commande permet de réaliser une liaison solidaire en rotation entre l'arbre (38) de la boîte de vitesses (8) entraîné par l'embrayage séparateur (6), l'arbre de sortie (62) de la boîte de vitesses (8) et le ralentisseur (56).

7. Modèle de chaîne cinématique selon une des revendications 1 à 6, **caractérisée en ce que** du côté sortie de la boîte de vitesses est prévu un médiateur (82), comportant un embrayage (86) disposant d'une position de point mort, dans laquelle l'embrayage (86) se trouve pendant l'enclenchement du ralentisseur (56).

8. Méthode d'enclenchement d'un ralentisseur (56) dans une chaîne cinématique pour véhicules automobiles (2) comportant un moteur d'entraînement (4), une boîte de vitesses (8), un embrayage séparateur (6) disposé entre le moteur d'entraînement (4) et la boîte de vitesses (8), et un ralentisseur (56) conçu comme dispositif de freinage continu, qui est entraîné par un arbre de boîte de vitesses (30, 38), **caractérisée en ce que** pour l'enclenchement du ralentisseur (56) d'abord la transmission du couple dans la boîte de vitesses (8) est interrompue, et **en ce que** ensuite est établie une liaison solidaire en rotation entre l'embrayage séparateur (6) et le ralentisseur (56), et **en ce que** le régime du ralentisseur (56) est adapté à l'aide de l'embrayage séparateur (6) au régime de la boîte de vitesses, qui doit être atteint par le ralentisseur (56) après la fin de l'interruption de la transmission du couple dans la boîte de vitesses (8), et **en ce que** ensuite l'interruption de la transmission du couple dans la boîte de vitesses (8) est terminée.
